# EUROPEAN PATENT SPECIFICATION

(11) **EP 3 243 702 B1**
(45) Date of publication and mention of the grant of the patent: **26.12.2018**
(21) Application number: 16169432.8
(22) Date of filing: 12.05.2016
(51) Int. Cl.: B60R 9/058

(54) **LOAD CARRIER FOOT**
LASTTRÄGERFUSS
PIED SUPPORT DE CHARGE

(43) Date of publication of application: 15.11.2017
(73) Proprietor: Mont Blanc Industri AB, 516 90 Dalsjöfors (SE)
(72) Inventor: Hallenbert, Lennart, 447 93 VÅRGÅRDA (SE)
(74) Representative: AWA Sweden AB

(56) References cited:
- EP-A1- 1 160 131
- DE-A1- 3 709 335
- DE-B3-102013 000 460

## Description

### Technical field of the Invention

The present invention relates to a load carrier foot for attaching a load carrier bar to a vehicle.

### Technical Background

There are various reasons for transporting luggage, goods and/or other articles on the roof of a vehicle. For example, the internal space in the vehicle may be limited, or dirty and soiled luggage are undesired to store and transport inside e.g. the trunk of the vehicle.

Thus, load carrier arrangements for transporting luggage, goods and/or other articles on the roof of a vehicle have been developed, see e.g. EP 1 683 679. A typical load carrier arrangement comprises at least one load carrier bar which is arranged over the roof of the vehicle transversal to the driving direction of the vehicle. At each end of the load carrier bar, a respective load carrier foot (also referred to as a mounting foot) is arranged to hold a respective end portion of the load carrier bar e.g. by means of a fastening arrangement comprising e.g. a rivet, or a screw and nut arrangement.

Furthermore, each load carrier foot rests on, or is attached to, the roof of the vehicle, or alternatively a roof rack or roof railing of the vehicle. Thus, each load carrier foot typically comprises a clamping element, such as a bracket, which clamps around the vehicle roof or roof rack of the vehicle. The clamping force which the clamping element exerts on the vehicle roof or roof rack is often supplied by a tensioning mechanism such as e.g. a lever arm. The clamping force is sometimes adjustable by an adjustable mechanism, for example a screw which is rotated into a receiving element (e.g. a nut) until a suitable clamping force is achieved. This is, for example, shown in EP 1 683 679. Moreover DE 10 2013 000 460 discloses according to its abstract: A roof bar for a motor vehicle, including a support structure for a roof bar element with a fastening claw which engages at a first end on a side wall rail of a vehicle body and is connected in an articulated fashion to a clamping lever. The fastening claw is guided in a guide in the support structure and a leaf spring is provided which, on one side, engages on the clamping lever-in the region of its free end and, on the other side, is supported on the support structure, wherein when the clamping lever is pressed down towards the attachment claw the-fastening claw is clamped on the side wall rail by the spring force.

However, the combination of the clamping element and the tensioning mechanism is associated with certain problems. For example, when applying and attaching the load carrier foot to the vehicle, there should be a relatively large gap between the portion of the clamping element which are to clamp the vehicle, and the corresponding surface of the vehicle. However, a large gap typically requires the tensioning arrangement not only to close the relatively large gap, but also provide for a sufficient clamping force. Such tensioning arrangements tends to be very complicated or at least large and bulky.

There is thus a need for improving the state of the art to provide a load carrier foot which at least partly solves these problems.

### Summary of the Invention

It is an object of the present invention to improve the current state of the art, and to solve, or at least mitigate, some of the above problems. These and other objects are achieved by a load carrier foot.

According to a first aspect of the present invention a load carrier foot according to claim 1 provided.

By having an arrangement which enables the whole bracket to be moved away from the body arrangement, the gap between the clamping portion of the bracket and the second surface of the vehicle may be arranged to be relatively large in an open state of the bracket (such as e.g. a fully open state of the bracket), which is beneficial when applying and attaching the load carrier foot to the vehicle. Moreover, by having the lever arm being pivotably connected to the body arrangement, and the bracket being pivotably connected to the lever arm, the lever arm may clamp the clamping portion to the second surface of the vehicle with a sufficient clamping force, while also providing for an arrangement enabling the gap to be relatively large as described above.

It should be understood that by stating that the arrangement enables the whole bracket to be moved away from the body arrangement, each portion of the bracket may be moved relative (e.g. away from) the body arrangement. Hence, the bracket is not directly connected to the body arrangement in such open states (such as e.g. the fully open state). Moreover and according to at least one example embodiment, the bracket is not directly pivotly connected to the body arrangement.

Moreover, the load carrier foot according to the invention is advantageous in that it allows for the load carrier foot to be mounted to a vehicle by being clamped between a first and a second surface of a vehicle.

The load carrier foot is adapted to be mounted to a vehicle such as a car or an utility vehicle by being clamped between a first and a second surface of the vehicle. This is achieved by a mechanical linkage, comprising a lever arm for force input from a user mounting the load carrier foot to the vehicle, and a bracket being movable such that a gap between the bracket (or the clamping portion of the bracket) and a vehicle support surface may be increased or decreased thereby changing the size of said gap.

As mentioned previously, the load carrier foot comprises a body arrangement having a first portion adapted to be connected to a load carrier bar. In at least some emboidments, the body arrangement comprises a main body element, or a main body portion, which comprises said first portion. Hence, the design of the first portion is such that it is attacheable to the load carrier bar, or at least adapted to enable the load carrier bar to rest on said first portion. The body arrangement (or as stated above the main body element, or the main body portion) further comprises a second portion comprising a vehicle support surface. The vehicle support surface is arranged, or configured to rest against a first surface of the vehicle. The first surface may be the outer roof of the vehicle, or it may be a surface of a vehicle roof rail (roof rack).

As mentioned previously, the load carrier foot comprises a lever arm, which lever arm is adapted to be operated by a user, i.e. be hand-operated by human force. Pivoting the lever arm in a first direction closes the gap, and subsequently clamps the load carrier foot in a secure position to the vehicle. A opposite pivoting movement of the lever arm un-clamps the load carrier foot from the vehicle and possibly subsequently acts to increase the size of the gap. The lever arm may be made from sheet metal, or it may be molded from a metal such as aluminium. The lever arm may also be made from plastic, such as e.g. high strength plastic.

As mentioned previously, operatively connected to the lever arm is the bracket. The clamping portion of the bracket may have the shape of a ledge configured to clamp the second surface of the vehicle. The ledge shape of the bracket is thus configured to grip around a portion of the vehicle in order to clamp the second surface of the vehicle and secure the load carrier foot to the vehicle when mounted (i.e. in the clamped state). As mentioned previously, the bracket is operatively connected to the lever arm. Hence, at least some movement of the lever arm translates to movement of the bracket. The lever arm is adapted to be able to arrange the bracket in at least two distinct and separate states. A first state which is the clamped state characterized in that the load carrier foot in this state is secured to the vehicle. A second state which is an open state in which the load carrier foot is removable from the vehicle. The open state may also be described as a state where the clamping portion of the bracket is separated from the second surface of the vehicle by a gap such as e.g. a relatively large gap.

As mentioned previously, the body arrangement further comprises a first pivot element pivotably connecting the body arrangement to the lever arm. The first pivot element may be a bolt and socket type pivot element or any other pivot element able to support the loads applied to the pivot element. As also mentioned previously, a second pivot element arranged to pivotably connect the bracket to the lever arm is also provided in the load carrier foot. Thus, the bracket is pivotably connected to the lever arm (by said second pivot element), and the lever arm is in turn pivotably connected to the body arrangement (by said first pivot element) which enables the whole bracket to be moved away from the body arrangement in order to greatly vary the size of said gap. In other words, the bracket may be arranged in an open state in which the pivotably movement of the bracket relative said body arrangement is transferred via the lever arm. Hence, the load carrier foot is mountable to the vehicle in an easy and simple manner.

The arrangement of the bracket, lever arm and body arrangement is such that the bracket in an open state is both rotatably and translatably movable relative the body arrangement (i.e. via the lever arm). According to at least one example embodiment, when the bracket is in a fully open state the bracket is only connected to the lever arm and not to the body arrangement. Hence the bracket may be moved out of the way from the body arrangement if needed when mounting or removing the load carrier foot from a vehicle. This reduces the risk for the bracket to damage the body and paint of the vehicle. Hence, the load carrier foot facilitates the removal and the attachement of the load carrier foot to the vehicle in and advantageous manner.

According to at least one exemplary embodiment of the present invention the lever arm forms an intermediate connecting element arranged between the body arrangement and the bracket and wherein said bracket is pivotably connected to said body arrangement solely via said lever arm.

Advantageously the lever arm forms an intermediate connecting element arranged between the body arrangement and the bracket. In such an arrangement and at least in said fully open state, the bracket is only in contact with the body arrangement through the lever arm. Such an arrangement enables for said gap to be large which simplifies mounting and removal of the load carrier foot to and from the vehicle.

According to at least one example embodiment, the intermediate connecting element (i.e. the lever arm) functions as an elongation element of the bracket, and thus enables the bracket to be moved further away from the body arrangement.

According to the present invention the first pivot element is arranged in a first geometrical horizontal plane and the second pivot element is arranged in a second geometrical horizontal plane and wherein the second geometrical horizontal plane is arranged at a position below the first geometrical horizontal plane when the bracket is in said clamped state.

Thus, the second pivot element is arranged at a position being below the first pivot element when the bracket is in the clamped state. By below, what is meant is that the second geometrical horizontal plane, and the second pivot element, when the bracket is in a clamped state is arranged closer, in a vertical direction, to the ground or possibly to the first surface of the vehicle, as compared to the first geometrical horizontal plane, and the first pivot element.

According to at least one exemplary embodiment the body arrangement comprises a lever arm connecting portion and wherein said lever arm is pivotably connected to said lever arm connecting portion.

According to at least one exemplary embodiment the load carrier foot further comprises an elongated connecting element connecting the bracket and the lever arm.

Thus the bracket may be pivotably connected to the lever arm by means of the elongated connecting element. Thus, the bracket may be pivotably connected to a first portion of the elongated connecting element (such as a first end portion of the elongated connecting element), e.g. via a third pivot element (further explained below), and the lever arm may in turn be pivotably connected to a second portion of the elongated connecting element (such as a second end portion of the elongated connecting element), which e.g may be embodied by the second pivot element.

According to at least one embodiment of the present invention the bracket is pivotably connected to the elongated connecting element by a third pivot element.

Hereby, the bracket may be pivotable relative the body arrangement by a further pivot element, and hence be moved relative the body arrangement to a larger degree compared to having only two pivot elementes.

When the bracket is pivotably connected to the elongated connecting element only axial forces may be transmitted from the bracket to the elongated connecting element. Thus the cross sectional area of the connecting element may be reduced compared to if the elongated connecting element would be connected to the bracket by a non-pivatble connection.

The elongated connecting element may be adapted to transfer axially compressive and/or axially tensile forces from the lever arm to the bracket. Thus, according to at least one example embodiment, the elongated connecting element forms a truss, or bar, linking or connecting the lever arm to the bracket. Hence, when the lever arm is pivoted, the movement of the lever arm is transmitted through the elongated connecting element to the bracket. The elongated connecting element may comprise a means for adjusting the length of the elongated connecting element, or in other ways alter the distance between the second pivot element (or where the lever arm is pivotably connected to the second portion of the elongated connecting element) of the lever arm and the third pivot element (or where the bracket is pivotably connected to the first portion of the elongated connecting element) arranged on the bracket. Hence, in such embodiments, the lever arm allows for adjusting the gap and additionally or alternatively the clamping force of the load carrier foot. This allows for adjusting the load carrier foot to be able to be mounted on vehicles of different types and makes.

According to at least one exemplary embodiment the bracket comprises a lever arm connecting portion, and wherein the lever arm connecting portion is connected to a bracket connecting portion of the lever arm by said elongated connecting element, and wherein said elongated connecting element is pivotably connected to the lever arm connecting portion of the bracket, and is pivotably connected to the bracket connecting portion of the lever arm.

As mentioned previously, the bracket comprises a lever arm connecting portion. The lever arm connecting portion may be pivotably connected to the elongated connecting element via a pivot element such as the third pivot element as described previously. The bracket connecting portion may be pivotably connected to the elongated connecting element via a pivot element such as the second pivot element.

Thus, connecting the bracket connecting portion of the lever arm and the lever arm connecting portion of the bracket is said elongated connecting element. The lever arm connecting portion of the bracket may be arranged in one end of the bracket or arranged in a middle portion of the bracket. The bracket connecting portion of the lever arm may e.g. be arranged on the middle portion of the lever arm or alternatively on an end portion of the lever arm. The placement of the lever arm connecting portion of the bracket and the bracket connecting portion of the lever arm may be adapted in order to adjust the force needed to pivot the lever arm, and the resulting clamping force of the bracket.

According to at least one exemplary embodiment of the present invention, in a clamped state, the lever arm is adapted to exert a force on the elongated connecting element in a direction towards said first pivot element.

When the bracket is in said clamped state, the bracket is prevented from being moved from the clamped state by the forces exerted on the bracket by the elongated connecting element. Hence if the elongated connecting element is viewed isolated from the remaining load carrier foot, the elongated connecting element is subjected to axially compressive forces when the brackets in said clamped state or is being moved from an open state to said clamped state. Hence, when clamping the bracket the movement of, and force from, the lever arm is transmitted to the elongated connecting element. The elongated connecting element in turn transmits the forces to the bracket, thus moving the bracket and/or clamping the bracket between the first and second surfaces of the vehicle. This is in contrast to other clamping mechanisms where a connecting element would be exerted to axially tensile force when clamping the clamping mechanism.

According to at least one exemplary embodiment the elongated connecting element is subjected to axially compressive forces when said load carrier foot is in said clamped state.

As mentioned previously, the elongated connecting element is pivotably connected to the lever arm and the bracket, respectively. Hence, the elongated connecting element may only be exerted to axially compressive forces when the bracket is in said clamped state. Hence, when the elongated connecting element is not subjected to any bending moment or twisting movement the elongated connecting element may be downsized, e.g. be made having a smaller cross sectional area.

According to at least one exemplary embodiment the load carrier foot further comprises an interior plate arrangement comprised in said body arrangement, and wherein said lever arm connecting portion is comprised in said interior plate arrangement.

As mentioned previously, the body arrangement may comprise a main body portion or a main body element. The interior plate arrangement may then be mounted to the main body portion/element of the body arrangement. That is, the main body portion may be a first body element, comprising said first portion configured to be connected to a load carrier bar, and said second portion comprising the vehicle support surface configured to rest against a first surface of a vehicle; and the interior plate arrangement may be a second body element being connected to the first body arrangement. The interior plate arrangement may be made from a sheet metal and the main body portion may be made from a plastic material such as a high strength or fiber reinforced plastic. Hence if the interior plate arrangement is exerted to different force loads as compared to the main body portion, the interior plate arrangement may be reinforced without the need to reinforce the remaining body arrangement. This reduces the manufacturing cost of the load carrier foot. The interior plate arrangement may be mounted to the main body portion by using screws of similar securing elements. The interior plate arrangement may comprise, or at least partly house or hold, the first pivot element.

According to at least one exemplary embodiment of the present invention the interior plate comprises two opposite lateral side walls adapted to, at least in said clamped state, house said lever arm.

Hereby, the lever arm may be guided when moving the bracket from an open state to the clamped state.

When the bracket is in said clamped state two opposite lateral side walls arranged on the interior plate are adapted to house the lever arm. By housing the lever arm, the lever arm is arranged such that at least a part of the lever arm is arranged in the space between the two opposite lateral side walls thus saving space. This enables the load carrier foot to be designed having a small volume or small space footprint. In addition the two opposite lateral side walls of the interior plate may be arranged to house the second pivot element, and thus at least at portion of said bracket at least in said clamped state.

According to at least one exemplary embodiment of the present invention the bracket comprises twisting preventing means detachably lockable to the body arrangement.

The bracket may comprise twisting preventing means, or elements, able to be attached or connected to the body arrangement such that a twisting movement of the bracket is prevented. The twisting preventing means may be in the form of wings arranged on e.g. a middle portion of the bracket. The twisting preventing means may be arranged to fit into guide slots or tracks in the body arrangement. Thus when the bracked is being moved from and open state to a clamped state, the guide slots help to arrange and lock the bracket to the body arrangement. In addition the twisting preventing means may help to secure the bracket to the body arrangement. The twisting preventing means may comprise at least one protrusion adapted to be detachable connected to the interior plate arrangement of the body arrangement. In addition the twisting preventive means means may be of a snap lock type indicating wether the brackets is in a clamped state, by force and/or sound feedback to the user mounting the load carrier foot.

According to at least one exemplary embodiment of the present invention said load carrier foot is arranged to, upon a pivotable movement of said lever arm away from said load carrier bar, reduce said gap by moving said bracket in an upwards direction towards said second surface of the vehicle. In other words, for a load carrier foot arranged on the right hand side of the vehicle as seen in the forward driwing direction of the vehicle, a clockwise pivotable movement of the lever arm will reduce the gap and subsequently clamp the clamping portion of the bracket to the second surface of the vehicle. Oppositely, for a load carrier foot arranged on the left hand side of the vehicle as seen in the forward driwing direction of the vehicle, a counter clockwise pivotable movement of the lever arm will reduce the gap and subsequently clamp the clamping portion of the bracket to the second surface of the vehicle.

In addition a pivotable movement of the lever arm in the respective opposite direction, towards the load carrier bar results in un-clamping the clamping portion of the bracket from the second surface of the vehicle and subsequently increase of the gap.

According to at least one exemplary embodiment of the present invention the first pivot element comprises a cam element, and the load carrier foot comprises a cam pretension plate, wherein the cam element and the cam pretension plate form a resilient member adapted for preventing the lever arm from being removed from a lever arm end position.

When the first pivot element comprises a cam element and the load carrier foot comprises a cam pretension plate, a resilient member is formed. Such a resilient member may prevent the lever arm from being removed, or moved from, a lever arm end position. In order to move the lever arm from the lever arm end position a force threshold may be needed to be overcomed. Preventing the lever arm from being moved from the end position may reduce the risk for the lever arm to fall down towards to the vehicle and damage the vehicle body and paint. The cam member and the cam pretension plate may be such that a snap lock function is achieved thus giving motional or sound feedback when moving the lever arm into and/or from the lever arm end position.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows a perspective view of a load carrier foot in accordance with at least one example embodiments of the invention;
Fig. 2 shows the load carrier foot in Fig. 1, in an exploded view;
Fig. 3a-3e, shows the load carrier foot in Fig. 1 and Fig. 2, in different position when being opened or close;
Fig. 4 shows the load carrier foot in a cross sectional view.

All the figures are schematic and not necessarily drawn to scale.

### Detailed description of the drawings

Embodiments of the invention will be described in more detail in the following with reference to the accompanying drawings.

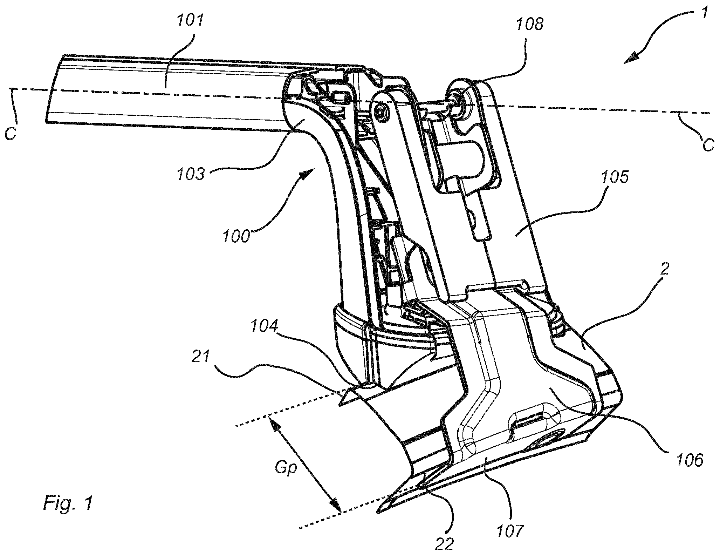

Fig. 1 shows a perspective view of a load carrier foot 1 attached to a load carrier bar 101 in accordance with at least one exemplary embodiment of the present invention.The load carrier foot 1 is arranged for being attached to the roof 2 of a vehicle and to support load from an item (not shown) by means of the load carrier bar 101. In all of Fig. 1 - Fig. 4 only one load carrier 1 foot is shown, but is should be understood that a corresponding load carrier foot is attached to the load carrier bar 101 on an opposite end of the vehicle.

A part of the roof 2 of a vehicle is seen in Fig. 1. The load carrier bar 101 is attached to the load carrier foot 1 and is configured to support and transfer a load applied to the load carrier bar 101, to the load carrier foot 1. The load carrier foot 1 comprises a body arrangement 100 connected to the load carrier bar 101. The body arrangement 100 comprises a first portion 103 and a second portion 104. The first portion 103 is configured to be connected and secured to the load carrier bar 101. The second portion 104 is configured to rest against a first surface 21, or a vehicle roof surface 2.

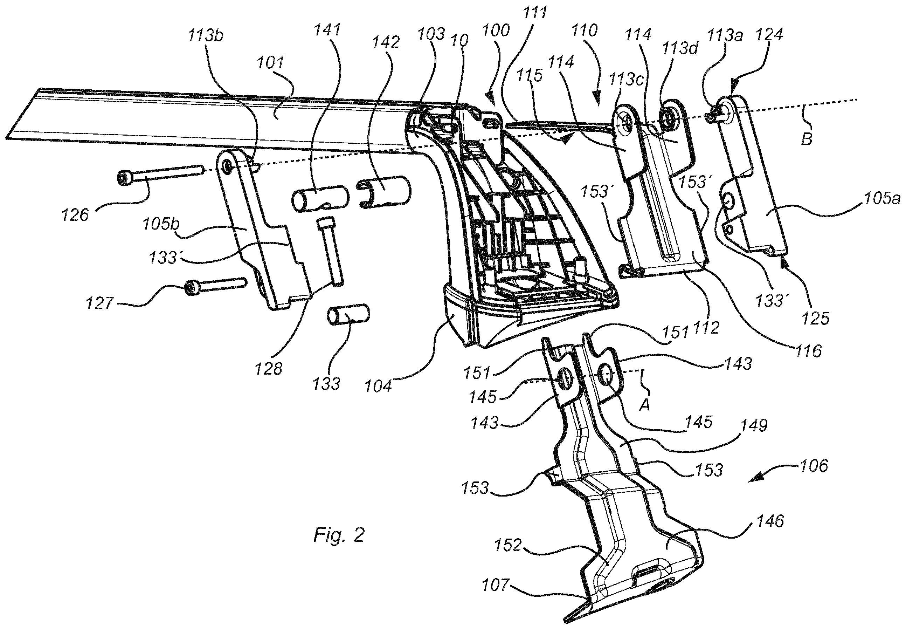

Fig. 1 further shows a bracket 106 arranged for holding and securing the load carrier foot 1 to the vehicle roof 2 when the load carrier foot 1 is mounted to the vehicle 2. In Fig. 1, the bracket 106 is shown in a clamped state in which a clamping portion 107 of the bracket 106 is clamped to a second surface 22 of the vehicle. Thus, there is no gap (g) between the clamping portion 107 of the bracket 106 and the second surface 22 of the vehicle. The gap (g) However, there is a bracket-body gap Gp is formed between the second portion 104, resting against the first surface 21, of the body arrangement 100 and a clamping portion 107 of the bracket 106 of the load carrier foot 1. When the load carrier foot 1 is secured to the vehicle, a portion of the vehicle surface 2 is received in the bracket-body gap Gp and the load carrier foot 1 is clamped to the second surface 22 of the vehicle body 2 between the second portion 104 and the clamping portion107 of the bracket 106. The load carrier foot 1 further comprises a clamping mechanism arranged for varying the size of the bracket-body gap Gp, and hence also the gap between the clamping portion 107 of the bracket 106 and the second surface 22 of the vehicle. The clamping mechanism comprises a lever arm 105 pivotably connected to the body arrangement 100. Hence, the lever arm is arranged to pivot around a first pivot element 108, or a first pivot point 108. The bracket 106 is pivotably connected to the lever arm 105 by an elongated connecting element (shown in Fig. 2 and indicated with reference numeral 128) which will be further discussed in the following figures.

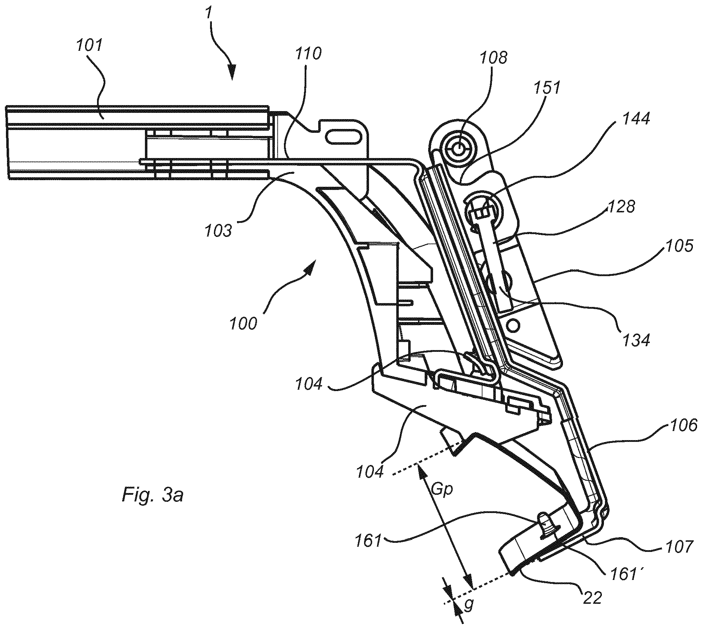

Fig. 2 shows an exploded view of the load carrier foot 1 shown in Fig. 1. The elongated connecting element 128 is pivotably connected to the lever arm 105 by a second pivot element (shown as reference numeral 134 in Fig. 3a) and to the bracket 106 by a third pivot element (shown as reference numeral 144 in Fig. 3a). The lever arm 105, the elongated connecting element 128 and the bracket 106 may thus be said to form a mechanical linkage connected to the body arrangement 100 through the first, second and third pivot elements 108, 133, 134.

The body arrangement 100 may comprise a main body element 10, or a main body portion 10, which comprises said first and second portions 103, 104 of said body arrangement 100. As shown in Fig. 2, comprised in the body arrangement 100 is an interior plate arrangement 110. The interior plate arrangement 110 may be made from sheet metal and may be attached to the main body portion 10 (e.g. a main body element 10) of the body arrangement 100 by fastening elements such as screws or by using nuts and/or bolts (not shown). In addition the interior plate arrangement 110 may also be secured to the load carrier bar 101 thus further securing the load carrier bar 101 to the load carrier foot 1. The interior plate arrangement 110 comprises a first plate portion 111 and a second plate portion 112 arranged at an angle in relation to the first plate portion 111. The second plate portion 112 of the interior plate arrangement 110 further comprises two opposite lateral side walls 114 projecting perpendicular and outwardly from a surface 116 of the second plate portion 112. The lateral side walls 114 are arranged adjacent a middle portion 115 connecting the first and second plate portions 111, 112. The lateral side walls 114 cooperate with the bracket 106 and the lever arm 105 and guide the bracket 106 into the correct position when the load carrier foot 1 is mounted to the vehicle surface 2. Further the lateral side walls 114 help with securing the bracket 106 in place along at least one axis when the load carrier foot 1 is mounted to a vehicle.

Each lateral side wall 114 is in Fig. 2 shown as being made from a piece of sheet metal. The shape of the two lateral side walls 114 may be made in the shape of sheet metal wings and may in a subsequent manufacturing step be folded thus forming a perpendicular angle to the second plate portion 112 of the interior plate arrangement 110. Each lateral side walls114 comprises a respective through hole 113c, 113d forming a pivot point for attaching a respective lever arm member 105a, 105b of the lever arm 105 to. The lever arm members 105a, 105b together form at least the main part of the lever arm 105. When the lever arm members 105a, 105b are attached to the lateral side walls 114 about the pivot point 113 the lever arm 105 is pivotably connected to the interior plate arrangement 110 and the body arrangement 100.

The lever arm members 105a, 105b each comprise a pivot member 113a, 113b. The pivot members 113a, 113b together with the respective through hole 113c, 113d of each lateral side wall 114 are comprised in the first pivot element 108 (as also shown in Fig.1). The lever arm members 105a, 105b has an elongated shape wherein the respective pivot member 113a, 113b is arranged at a respective first end portion 124, or body arrangement connecting portion 124, of the lever arm members 105a, 105b. Arranged on an opposite end of the lever arm members 105a, 105b is a respective second end portion 125. Between the first and second end portion 124, 125 is a middle portion, or a bracket connecting portion.

Holding the two lever arm members 105a, 105b together, and thereby together with the lever arm members 105a, 105b forming the lever arm 105 are two bolts 126, 127. A first bolt 126 is arranged coaxial to the axis B of the through holes 113c, 113d of the two lateral side walls 114 and holds the respective first ends 124 of the lever arm members 105a, 105b together. In other words, the first bolt 126 is arranged to extend through the respective through hole 113c, 113d and bolt the two lever arm members 105a, 105b together. The first bolt 126 is thus comprised in the first pivot element 108. The first pivot element 108 is here thus formed or defined by the first bolt 126, the two through holes 113c, 113d of the lateral side walls 114 and the pivot members 113a, 113b of the two respective lever arm members 105a, 105b.

Each of the lever arm members 105a, 105b comprises a respective second pivot member recess 133' arranged adjacent a middle portion of the lever arm members 105a, 105b between the first and the second end portions 124, 125 of the lever arm members 105a, 105b. The second pivot member recesses 133' are arranged for receiving a pivot pin member 133 such that said pivot pin member 133 and said second pivot member recesses 133' are comprised in the second pivot element 134. Pivotably connected to the second pivot element 134 is an elongated connecting element 128 connecting the lever arm 105 to the bracket 106. The elongated connecting element 128 is thus adapted to mechanically transfer force between the lever arm 105 and the bracket 106, and also enable pivoting of the bracket 106 in relation to the lever arm 105. This is achieved by the elongated connecting element 128 being connected to the second pivot element 134 of the lever arm 105 and to the bracket 106 through a third pivot element 144.

The elongated connecting element 128 may be an adjustable connecting element 128. Such adjustable connecting element 128 may comprise a threaded rod or bolt 128 threadingly connecting said second pivot element 134 and said third pivot element 144 such that a rotation of said rod increases or decreases an axial distance between said second and third pivot elements 134, 144. The third pivot element 144 is comprising a pivot pin 141 arranged to be pivotably received in a respective through hole 145 of the two securing wings 143. Moreover, a protection socket 142, or protection collet may be pres-fitted to the pivot pin 141. The pivot pin 141 is thus connected to the bracket 106 via the two securing wings 143.

The bracket 106 comprises a body portion 146 made from e.g. sheet metal. The body portion 146 has an inner surface 150 facing the body arrangement 100 and the interior plate arrangement 110 when the bracket 106 is in the clamped state. Opposite the inner surface 150, on the bracket 106, is an outer surface 149. The bracket 106 is arranged, on one end of the body portion 146, with the two securing wings 143 extending outwardly from the outer surface 149. The securing wings 143 may be described as two parallel protrusions, protruding outwardly from the outer surface 149 of the bracket body portion 146 at an angle being approximately perpendicular to the outer surface 149. Each one of the securing wings 143 comprise a through hole 145 arranged for receiving the pivot pin 141 of the third pivot element 144. The through holes 145 of the two securing wings 143 are aligned, and share an axis A.

The securing wings 143 of the bracket 106 and the lateral side walls 114 of the interior plate arrangement 110 are shaped correspondingly and are adapted to co-operate in such a way that the securing wings 143 may be guided internally of the lateral side walls 114.

According to at least one example embodiment, each one of the securing wing 143 is in one end arranged having a seat 151 adapted to connect to and secure the bracket 106 to the first pivot element 108 when the load carrier foot 1 is mounted to the vehicle roof 2 (i.e. in the clamped state). The bracket 106 is further arranged having a middle mechanical reinforcing section 152, adapted to increase the stiffness and mechanical strength of the bracket 106.

Arranged on a middle portion of the bracket 106 are two twisting preventing means 153. The twisting preventing means 153 are arranged as two protrusions adapted to be received in two matching receiving recesses or tracks 153' in the body arrangement 100 (such as in the interior plate arrangement 110) of the load carrier foot 1. When the bracket is moved from an open position to a clamped position the respective twisting preventing means 153 is received into the respective receiving recess or track 153'. The receiving recesses or tracks are discussed in more detail in relation to Figs. 3a-3e.

At the other end of the bracket 106, opposite from the end comprising the securing wings 143 is the clamping portion 107. The clamping portion 107 is arranged to grip around a part of the vehicle roof 2, or a corner of the roof such as the drip drain or similar, or chassis, of a vehicle and thereby clamp the second surface 22 of the vehicle and secure the load carrier foot 1 to the vehicle. The load carrier foot 1 is thereby clamped and in contact with a first surface 21 and a second surface 22 of the vehicle. As shown in Fig. 2, the clamping portion 107 has the form of a ledge, arranged protruding outwardly from the inner surface 150 of the bracket 106.

The bracket 106 shown in Fig. 3a further comprises a guide pin 161 (not shown in Fig. 2) adapted to be received in a guiding recess arranged in the second surface 22 of the vehicle e.g. in the chassis of the vehicle. The guiding pin 161 will be further discussed in relation to Figs. 3a-3e. The clamping portion 107 may have a different shape than that shown in Fig. 2, depending on the vehicle make or model the load carrier foot 1 is configured to work with. The clamping portion 107 may be referred to as a gripping portion 107.

The function of the load carrier foot 1 shown in Fig. 1 and Fig. 2 will now be discussed in conjunction with Figs. 3a-3e.

Fig 3a shows a side view of the load carrier foot 1 shown in Fig. 1 and Fig. 2 when the load carrier foot 1 is in a clamped state (may also be referred to as a closed state or a secured state) and properly mounted to the vehicle roof 2. In the clamped state the bracket-body gap size Gp is such that there is indirect contact between the clamping portion 107 and the oppositely arranged second portion 104 of the load carrier foot 1. Moreover, the clamping portion 107 is in contact with the second surface 22 of the vehicle and there is no gap (g) present. The gap (g) may be referred to as a clamping gap. In the clamped state, the clamping gap (g) is zero.

In an upper end of the elongated bracket 106, opposite the gripping portion 107, the seats 151 are engaged to the first pivot element 108, and prevent the bracket 106 from moving outwardly from the interior plate arrangement 110, thereby preventing the locking mechanism, and the load carrier foot 1 from coming loose from the vehicle surface 2. The clamping portion 107 also help with guiding the bracket 106 into the correct position when the load carrier foot 1 is being clamped, e.g. moved from an open to the clamped state by means of the guiding pin 161. Further guiding of the bracket 106 to the interior plate arrangement 110 are the twisting preventing means 153. Fig. 3a shows the twisting preventing means 153 being received into a respective receiving recesses or tracks 153'. Hence, when the load carrier foot 1 is in the clamped state, the twisting preventing means 153 and respective receiving recess 153' further secure the bracket 106 to the interior plate arrangement 110.

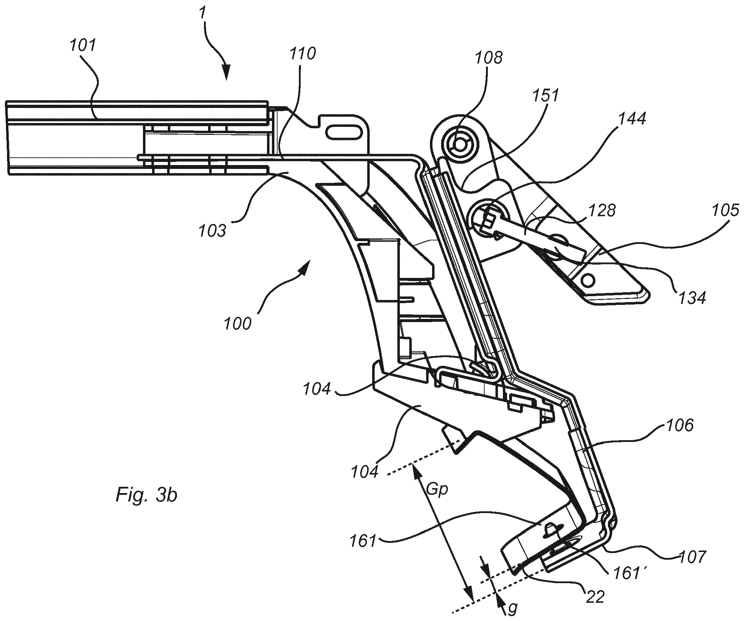

Fig. 3b shows the load carrier foot 1 when the lever arm 105 has been pivoted, around the first pivot element 108, in a motion away from the interior plate arrangement 110 and the roof surface 2 of the vehicle. As seen in the figure the pivotational movement of the lever arm 105 is counter clock wise. The pivot movement of the lever arm 105 is translated to a movement of the connecting element 128 which in turn pulls the bracket 106 in a motion downwards away from the first pivot element 108. The connecting element 128 is connected to the lever arm 105 and the bracket 106 by the second and the third pivot elements 134, 144 such that forces from the lever arm 105 is transmitted to the bracket 106 and the bracket 106 is moved towards an open state.

Naturally an opposite movement of the lever arm 105 as that shown in Fig. 3b results in that the bracket is moved towards the clamped state. When the bracket 106 moved and is being close to the clamped state the bracket 106 is primarily moved linearly upwards and downwards, towards and away from the second surface 22 of the vehicle, and parallel to the interior plate arrangement 110 during which the seats 151, the twisting preventing means 153 and the guiding pin 161 control the movement of the bracket 106 and prevent the bracket 106 from moving more freely.

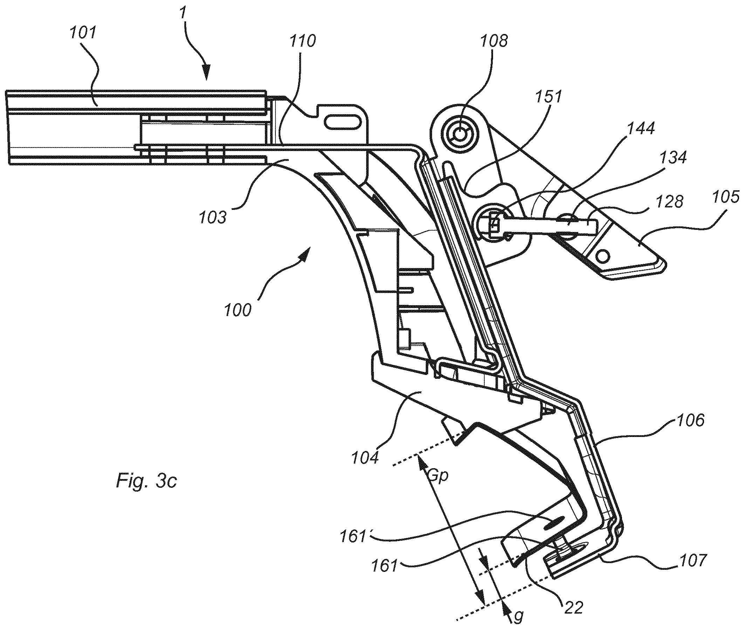

Fig. 3c shows the load carrier foot 1 when the lever arm 105 has been further pivoted around the first pivot element 108, in a motion away from the interior plate arrangement 110 as compared to the position of the load carrier foot 1 shown in Fig. 3b. In the position shown in Fig. 3c the bracket 106 has been further moved linearly downward away from the first pivot element 108 such that the seats 151, the twisting preventing means 153 and the guiding pin 161 are no longer in contact with the interior plate arrangement 110. Thus further movement of the lever arm 105 or the bracket 106 will allow the bracket 106 to be moved both translationally and rotationally around the third pivot element 144 connecting the bracket 106 to the elongated connecting element 128. As is shown in Fig. 3c the bracket-body gap size Gp, as well as the clamping gap (g) has been further increased and the guiding pin 161 has been moved out of the guiding receiving recess 161' in the second vehicle surface 22.

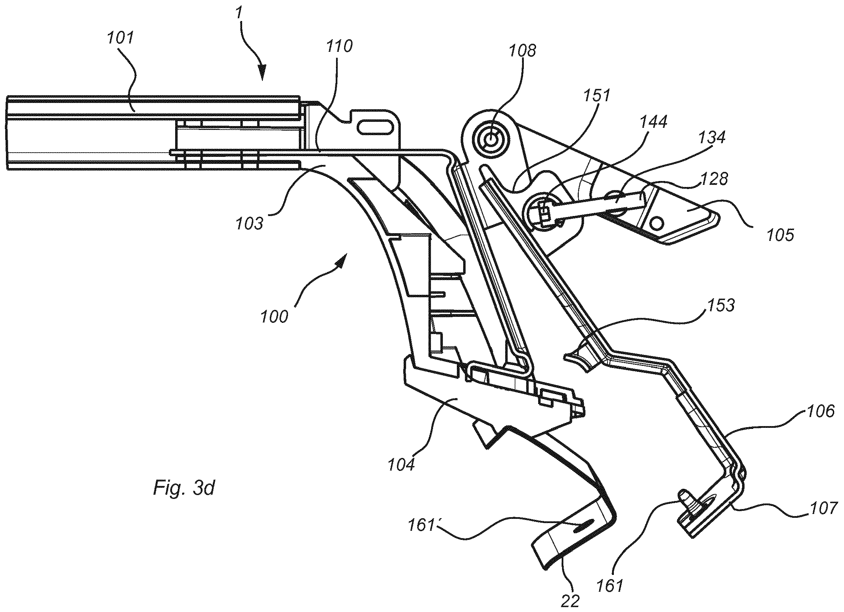

Fig .3d shows the load carrier foot 1 in a state in which the lever arm 105 has been further pivoted around the first pivot element 108, in a motion away from the interior plate arrangement 110 as compared to Fig. 3c. The movement of the lever arm 105 has moved the bracket 106 such that the bracket 106 is no longer in contact with the interior plate arrangement 110. The bracket 106 is only in indirect contact with the interior plate arrangement 110. The bracket 106 is thus only connected to the body arrangement 100 through the lever arm 105, and more precisely through the third pivot element 144, the elongated connecting element 128, the second pivot element 134 and the lever arm 105. In the position shown in Fig. 3d the bracket 106 may be moved freely and the load carrier foot 1 may be removed from the roof surface 2 of the vehicle. Hence the position of the load carrier foot 1 shown in Fig. 3d may be said to be an open position.

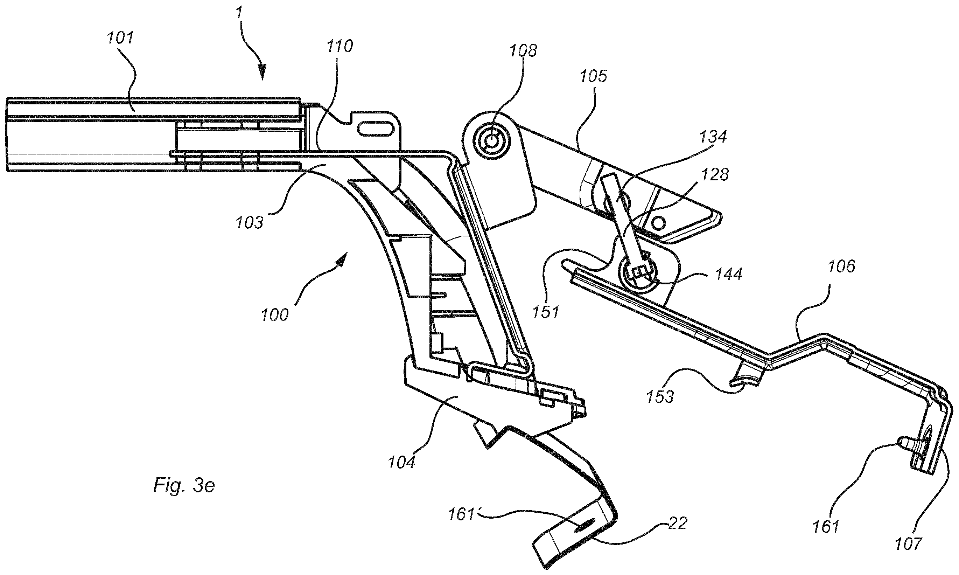

Fig. 3e shows a position where the bracket 106 has been moved by pivoting the elongated connecting element 128 around the second pivot element 134 and the third pivot element 144. The position shows how the first pivot element 108 connects the lever arm 105 to the interior plate arrangement 110. The second pivot element 134 connects the elongated connecting element 128 to the lever arm 105. The third pivot element 144 connects the elongated connecting element 128 to the bracket 106. As illustrated in Fig. 3e, the whole bracket 106 is distant from the body arrangement 100, and the whole bracket 106 has thus been moved away from the body arrangement 100 as compared to e.g. Fig. 3a, and application and installation of the load carrier foot 1 to the vehicle is facilitated by the large distance from the bracket 106 and the second surface 22 of the vehicle.

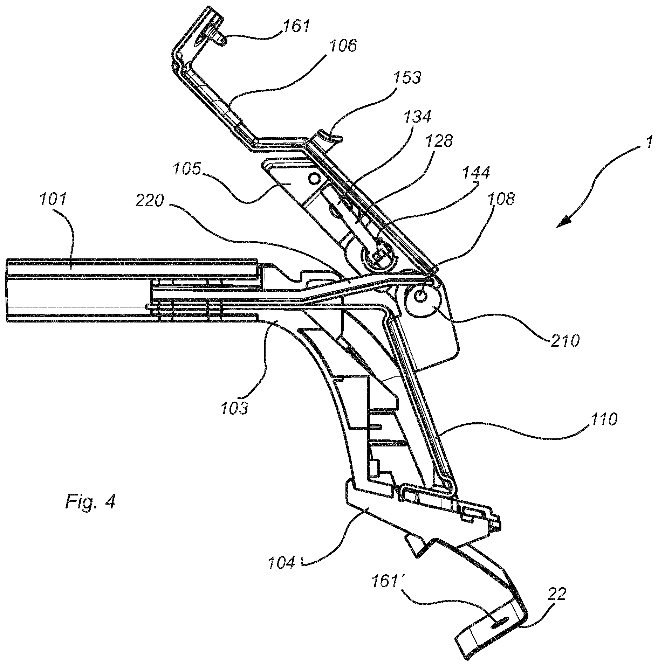

Fig. 4 shows the load carrier foot 1 in a cross sectional view taken along the elongated direction of the load carrier bar along a line C-C in Fig. 1. In the figure the lever arm 105 has been pivoted around the first pivot element 108 until it has reached an end position, from which it cannot be pivoted further in the same pivot direction. The first pivot element 108 is shown as comprising a cam element 210. The cam element 210 is adapted to interact with a cam pretension plate 220 and together form a resilient means 200 when the lever arm 105 is in the end position. Thus, when trying to move the lever arm 105 from the end position a force threshold needs to be overcome in order for the lever arm 105 to be moved from the end position shown in the Fig. 4. The resilient means allows the bracket 106, elongated connecting element 128 and the lever arm 105, to be placed in the end position when the load carrier foot 1 is being mounted to the roof surface 2 of the vehicle. Keeping the bracket 106, elongated connecting element 128 and the lever arm 105 securely in the end position reduces the risk for the bracket 106, elongated connecting element 128 and the lever arm 105 from being accidentally moved from the end position towards the roof surface 2 of the vehicle with resulting paint or body damage to the vehicle body.

According to at least one example embodiment, the cam pretension plate 220 may act as a fastening means to the load carrier bar 101, e.g. by clamping to an internal surface of load carrier bar 101. Thus, the movement of the lever arm 105 may also affect attachment/detachment of the load carrier foot 1 to the load carrier bar 101.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A load carrier foot (1) comprising:
a body arrangement (100) having a first portion (103) configured to be connected to a load carrier bar (101), and having a second portion (104) comprising a vehicle support surface configured to rest against a first surface of a vehicle (21),
a lever arm (105),
a bracket (106) having a clamping portion (107) configured to clamp a second surface (2) of the vehicle, said bracket (106) being operatively connected to said lever arm (105), wherein said lever arm (105) is adapted to arrange said bracket (106) in a clamped state where the clamping portion (107) is in contact with the second surface (22) of the vehicle in such a way that the bracket (106) clamps the second surface of the vehicle (22), and to arrange said bracket in at least one open state where the clamping portion is separated from the second surface (22) by a gap (g),
a first pivot element (108) pivotably connecting said body arrangement (100) to said lever arm (105);
a second pivot element (134) pivotably connecting said bracket (106) to said lever arm (105), thereby enabling the whole bracket (106) to be moved away from the body arrangement (100) in order to vary the size of said gap (g), **characterised in that**
the first pivot element (108) is arranged in a first geometrical horizontal plane and the second pivot element (134) is arranged in a second geometrical horizontal plane and wherein the second geometrical horizontal plane is arranged at a vertical position below the first geometrical horizontal plane when the bracket (106) is in said clamped state.

2. The load carrier foot (1) according to claim 1, wherein said lever arm (105) forms an intermediate connecting element arranged between the body arrangement (100) and the bracket (106) and wherein said bracket (106) is pivotably connected to said body arrangement (100) solely via said lever arm.

3. The load carrier foot (1) according to any one of the preceding claims, further comprising an elongated connecting element (128) connecting the bracket (106) and the lever arm (105).

4. The load carrier foot (1) according to claim 3, wherein the bracket (106) comprises a lever arm connecting portion, and wherein the lever arm connecting portion is connected to a bracket connecting portion of said lever arm (105) by said elongated connecting element (128), and wherein said elongated connecting element is pivotably connected to the lever arm connecting portion of the bracket, and is pivotably connected to the bracket connecting portion of the lever arm.

5. The load carrier foot according to any one of claims 3-4, wherein, in said clamped state, the lever arm (105) is adapted to exert a force on the elongated connecting element (128) in a direction towards said first pivot element (108).

6. The load carrier foot according to claim 5, wherein said elongated connecting element (128) is subjected to axially compressive forces when said load carrier foot is in said clamped state.

7. The load carrier foot according to any one of the preceding claims, further comprising an interior plate arrangement (110) comprised in said body arrangement (100), and wherein said lever arm connecting portion is comprised in said interior plate arrangement.

8. The load carrier foot according to claim 7, wherein said interior plate comprises two opposite lateral side walls (114) adapted to, at least in said clamped state, house said lever arm (105).

9. The load carrier foot according to any one of the preceding claims, wherein said bracket (106) comprises twisting preventing means (153) detachably lockable to the body arrangement (100).

10. The load carrier foot according to any one of the preceding claims, wherein said load carrier foot is arranged to, upon a pivotable movement of said lever arm (105) away from said load carrier bar (101), reduce said gap (g) by moving said bracket (106) in an upwards direction towards said second surface (2) of the vehicle.

11. The load carrier foot according to claim 3 or any one of the claims 4-10 when dependent on claim 3, wherein said bracket (106) is pivotably connected to said elongated connecting element (128) by a third pivot element (144).

12. The load carrier foot according to any one of the preceding claims, wherein said first pivot element (108) comprises a cam element (210), and said load carrier foot comprises a cam pretension plate (220), wherein said cam element and said cam pretension plate form a resilient member (200) adapted for preventing the lever arm (105) from being removed from a lever arm end position.

## Patentansprüche

1. Lastträgerfuß (1), umfassend:
eine Körperanordnung (100) mit einem ersten Abschnitt (103), der konfiguriert ist, um mit einer Lastträgerstange (101) verbunden zu sein, und mit einem zweiten Abschnitt (104), der eine Fahrzeugtragfläche umfasst, die konfiguriert ist, um an eine erste Fläche eines Fahrzeugs (21) anzuliegen, und
einen Hebelarm (105),
eine Halterung (106) mit einem Klemmabschnitt (107), der konfiguriert ist, um eine zweite Fläche (2) des Fahrzeugs zu klemmen, wobei die Halterung (106) mit dem Hebelarm (105) wirkverbunden ist, wobei der Hebelarm (105) ausgelegt ist, um die Halterung (106) in einem geklemmten Zustand anzuordnen, in dem der Klemmabschnitt (107) mit der zweiten Fläche (22) des Fahrzeugs in einer derartigen Weise in Kontakt ist, dass die Halterung (106) die zweite Fläche des Fahrzeugs (22) klemmt, und um die Halterung in mindestens einem offenen Zustand anzuordnen, in dem der Klemmabschnitt von der zweiten Fläche (22) durch einen Spalt (g) getrennt ist,
ein erstes Schwenkelement (108), das die Körperanordnung (100) mit dem Hebelarm (105) schwenkbar verbindet,
ein zweites Schwenkelement (134), das die Halterung (106) mit dem Hebelarm (105) schwenkbar verbindet, wodurch der gesamten Klammer (106) ermöglicht wird, von der Körperanordnung (100) weg bewegt zu werden, um die Größe des Spalts (g) zu variieren, **dadurch gekennzeichnet, dass**
das erste Schwenkelement (108) in einer ersten geometrischen horizontalen Ebene angeordnet ist und das zweite Schwenkelement (134) in einer zweiten geometrischen horizontalen Ebene angeordnet ist und wobei die zweite geometrische horizontale Ebene in einer vertikalen Position unter der ersten geometrischen horizontalen Ebene angeordnet ist, wenn die Halterung (106) in dem geklemmten Zustand ist.

2. Lastträgerfuß (1) nach Anspruch 1, wobei der Hebelarm (105) ein Zwischenverbindungselement bildet, das zwischen der Körperanordnung (100) und der Halterung (106) angeordnet ist, und wobei die Halterung (106) mit der Körperanordnung (100) allein über den Hebelarm schwenkbar verbunden ist.

3. Lastträgerfuß (1) nach einem der vorhergehenden Ansprüche, ferner umfassend ein längliches Verbindungselement (128), das die Halterung (106) und den Hebelarm (105) verbindet.

4. Lastträgerfuß (1) nach Anspruch 3, wobei die Halterung (106) einen Hebelarm-Verbindungsabschnitt umfasst und wobei der Hebelarm-Verbindungsabschnitt mit einem Halterung-Verbindungsabschnitt des Hebelarms (105) durch das längliche Verbindungselement (128) verbunden ist und wobei das längliche Verbindungselement mit dem Hebelarm-Verbindungsabschnitt der Halterung schwenkbar verbunden ist und mit dem Halterung-Verbindungsabschnitt des Hebelarms schwenkbar verbunden ist.

5. Lastträgerfuß nach einem der Ansprüche 3-4, wobei der Hebelarm (105) in dem geklemmten Zustand ausgelegt ist, um eine Kraft auf das längliche Verbindungselement (128) in eine Richtung hin zu dem ersten Schwenkelement (108) auszuüben.

6. Lastträgerfuß nach Anspruch 5, wobei das längliche Verbindungselement (128) axial Kompressionskräften ausgesetzt ist, wenn der Lastträgerfuß in dem geklemmten Zustand ist.

7. Lastträgerfuß nach einem der vorhergehenden Ansprüche, ferner umfassend eine Innenplattenanordnung (110), die in der Körperanordnung (100) enthalten ist, und wobei der Hebelarm-Verbindungsabschnitt in der Innenplattenanordnung enthalten ist.

8. Lastträgerfuß nach Anspruch 7, wobei die Innenplatte zwei sich gegenüberliegende laterale Seitenwände (114) umfasst, die ausgelegt sind, um zumindest in dem geklemmten Zustand den Hebelarm (105) unterzubringen.

9. Lastträgerfuß nach einem der vorhergehenden Ansprüche, wobei die Halterung (106) Verdrehungsverhinderungsmittel (153) umfasst, die mit der Körperanordnung (100) abnehmbar verriegelbar sind.

10. Lastträgerfuß nach einem der vorhergehenden Ansprüche, wobei der Lastträgerfuß angeordnet ist, um bei einer Schwenkbewegung des Hebelarms (105) weg von der Lastträgerstange (101) den Spalt (g) durch Bewegen der Halterung (106) in eine Aufwärtsbewegung hin zu der zweiten Fläche (2) des Fahrzeugs zu verringern.

11. Lastträgerfuß nach Anspruch 3 oder einem der Ansprüche 4-10, wenn abhängig von Anspruch 3, wobei die Halterung (106) mit dem länglichen Verbindungselement (128) durch ein drittes Schwenkelement (144) schwenkbar verbunden ist.

12. Lastträgerfuß nach einem der vorhergehenden Ansprüche, wobei das erste Schwenkelement (108) ein Nockenelement (210) umfasst und der Lastträgerfuß eine Nockenvorspannplatte (220) umfasst, wobei das Nockenelement und die Nockenvorspannplatte ein elastisches Element (200) bilden, das ausgelegt ist, um zu verhindern, dass der Hebelarm (105) von der Hebelarm-Endposition entfernt wird.

## Revendications

1. Pied support de charge (1) comprenant :
un agencement de corps (100) ayant une première partie (103) configurée pour être raccordée à une barre de support de charge (101) et ayant une deuxième partie (104) comprenant une surface de support de véhicule configurée pour reposer contre une première surface d'un véhicule (21),
un bras de levier (105),
un support (106) ayant une partie de serrage (107) configurée pour serrer une deuxième surface (2) du véhicule, ledit support (106) étant raccordé en fonctionnement audit bras de levier (105), ledit bras de levier (105) étant adapté pour disposer ledit support (106) dans un état serré où la partie de serrage (107) est en contact avec la deuxième surface (22) du véhicule de telle manière que le support (106) serre la deuxième surface du véhicule (22) et pour disposer ledit support dans au moins un état ouvert où la partie de serrage est séparée de la deuxième surface (22) par un espace (g),
un premier élément de pivotement (108) raccordant en pivotement ledit agencement de corps (100) audit bras de levier (105),
un deuxième élément de pivotement (134) raccordant en pivotement ledit support (106) audit bras de levier (105), permettant de ce fait à tout le support (106) d'être éloigné de l'agencement de corps (100) afin de modifier la taille dudit espace (g), **caractérisé en ce que** le premier élément de pivotement (108) est disposé dans un premier plan géométrique horizontal et le deuxième élément de pivotement (134) est disposé dans un deuxième plan géométrique horizontal et le deuxième plan géométrique horizontal étant disposé dans une position verticale sous le premier plan géométrique horizontal lorsque le support (106) se trouve dans ledit état serré.

2. Pied support de charge (1) selon la revendication 1, ledit bras de levier (105) formant un élément de raccordement intermédiaire disposé entre l'agencement de corps (100) et le support (106) et ledit support (106) étant raccordé en pivotement audit agencement de corps (100) uniquement par le biais dudit bras de levier.

3. Pied support de charge (1) selon l'une quelconque des revendications précédentes, comprenant en plus un élément de raccordement allongé (128) raccordant le support (106) et le bras de levier (105).

4. Pied support de charge (1) selon la revendication 3, le support (106) comprenant une partie de raccordement de bras de levier et la partie de raccordement de bras de levier étant raccordée à une partie de raccordement de support dudit bras de levier (105) par ledit élément de raccordement allongé (128) et ledit élément de raccordement allongé étant raccordé en pivotement à la partie de raccordement de bras de levier du support et étant raccordé en pivotement à la partie de raccordement de support du bras de levier.

5. Pied support de charge selon l'une quelconque des revendications 3-4, dans ledit état serré, le bras de levier (105) étant adapté pour exercer une force sur l'élément de raccordement allongé (128) dans une direction orientée vers ledit premier élément de pivotement (108).

6. Pied support de charge selon la revendication 5, ledit élément de raccordement allongé (128) étant soumis à des forces de compression exercées axialement lorsque ledit pied support est dans ledit état serré.

7. Pied support de charge selon l'une quelconque des revendications précédentes, comprenant en plus un agencement de plaque intérieure (110) comprimé dans ledit agencement de corps (100) et ladite partie de raccordement de bras de levier étant comprimée dans ledit agencement de plaque intérieure.

8. Pied support de charge selon la revendication 7, ladite plaque intérieure comprimant deux parois latérales opposées (114) adaptées pour loger ledit bras de levier (105), au moins dans ledit état serré.

9. Pied support de charge selon l'une quelconque des revendications précédentes, ledit support (106) comprimant des moyens anti-torsion (153) verrouillables de façon amovible à l'agencement de corps (100).

10. Pied support de charge selon l'une quelconque des revendications précédentes, ledit pied support de charge étant disposé, en effectuant un mouvement de pivotement dudit bras de levier (105) éloigné de ladite barre de support de charge (101), pour réduire ledit espace (g) en déplaçant ledit support (106) dans une direction ascendante vers ladite deuxième surface (2) du véhicule.

11. Pied support de charge selon la revendication 3, ou l'une quelconque des revendications 4-10 lorsqu'elles sont dépendantes de la revendication 3, ledit support (106) étant raccordé en pivotement audit élément de raccordement allongé (128) par un troisième élément de pivotement (144).

12. Pied support de charge selon l'une quelconque des revendications précédentes, ledit élément de pivotement (108) comprenant un élément à came (210) et ledit premier pied support de charge comprenant une plaque de prétension à came (220), ledit élément à came et ladite plaque de prétension à came formant un membre résilient (200) adapté pour éviter au bras de levier (105) d'être enlevé d'une position extrême de bras de levier.
